# EUROPEAN PATENT APPLICATION

(11) **EP 4 513 633 A1**
(43) Date of publication of application: **26.02.2025**
(21) Application number: 24781091.4
(22) Date of filing: 19.03.2024
(51) Int. Cl.: H01M 10/658, H01M 10/653, H01M 10/6555, H01M 10/613, H01M 50/211

(54) **BATTERY MODULE HAVING HEAT DISSIPATION AND INSULATION FUNCTION AND BATTERY PACK COMPRISING SAME**

(30) Priority: 28.03.2023 KR 20230040146
(71) Applicant: HTC Co., Ltd, Gyeonggi-do 15421 (KR)
(72) Inventor: KWON, Jae Sung, Yongin-si Gyeonggi-do 17003 (KR); PARK, Sang Ku, Siheung-si Gyeonggi-do 14963 (KR); KIM, Byung Soo, Incheon 22535 (KR); LEE, Ho, Ansan-si Gyeonggi-do 15289 (KR)
(74) Representative: Cabinet Chaillot
(86) International application number: PCT/KR2024/003390
(87) International publication number: WO 2024/205100

(57) **Abstract**

Proposed are a battery module having a heat dissipation function and a heat insulation function and a battery pack provided with the battery module. The battery module includes a cell stack (100) and a module case (200) accommodating the cell stack. The cell stack includes a plurality of battery cells (110) and at least one heat dissipation composite (120) and heat insulation composite (130) interposed between the battery cells. The heat dissipation composite includes a graphite sheet (121) that is insulation-coated and a cushioning member (122) which is formed of a flame-retardant material and which is stacked on a first side surface of the graphite sheet. The heat insulation composite includes a vacuum heat insulation plate (131) having a vacuum space therein and a cushioning member (132) which is formed of a flame-retardant material and which is stacked on a first side surface of the vacuum heat insulation plate.

## Description

### Technical Field

The present disclosure relates to a battery module. More particularly, the present disclosure relates to a battery module having a heat dissipation function for dissipating heat generated from a battery cell and also having a heat insulation function for blocking heat so that heat is not diffused to adjacent battery cells when thermal runaway occurs. In addition, the present disclosure relates to a battery pack provided with the battery module described above.

### Background Art

Generally, a battery module is provided with a cooling system in order to prevent the life span of the battery module from being rapidly shortened due to temperature when the battery module is used for a long time, and such a cooling system is designed in consideration of a heat generation amount and so on according to the environment in which the battery module is used.

However, when some battery cells show abnormal heating due to failure while the battery module is being used, the temperature of the battery module may continuously increase. In this situation, when the temperature of the battery module exceeds a critical temperature, thermal runaway may occur and a safety issue may occur.

That is, when the thermal runaway generated in some battery cells propagates to adjacent battery cells within a short time, the temperature of the battery module increases rapidly as a whole, which may lead to an increase in temperature of the entire battery pack including a plurality of battery modules and thus seriously damage property and human life. Therefore, in order to prevent rapid propagation of the thermal runaway phenomenon, it is necessary to apply a member for blocking heat between adjacent battery cells.

In addition, a cushioning member configured to absorb swelling by being compressed according to expansion of the battery cell due to swelling is applied between adjacent battery cells. The cushioning member may employ an Expanded Polypropylene Pad (EPP) or a urethane pad.

Meanwhile, in Korean Patent No. 10-2020-0106378, there is provided a battery module including a pair of swelling absorption pads configured to be compressed according to a volume expansion of a battery cell due to swelling of the battery cell and a heat blocking pad interposed between the pair of swelling absorption pads and configured to block heat from being transferred between adjacent battery cells and to expand at a temperature equal to or more than a predetermined reference temperature. That is, in Korean Patent No. 10-2020-0106378, by using the pair of swelling absorption pads and the heat blocking pad interposed between the pair of swelling absorption pads, a distance between adjacent battery cells is capable of being constantly maintained even when the temperature inside a battery module exceeds a critical temperature due to a heat generation phenomenon generated in some battery cells, and a propagation of a thermal runaway phenomenon between the adjacent battery cells is also capable of being delayed.

In addition, in Korean Patent No. 10-2022-0114801, there is provided a battery module including at least one cushioning pad interposed between battery cells and a heat transfer layer disposed at least one of both surfaces of the cushioning pad and in surface contact with the battery cell, the heat transfer layer including a graphite material. That is, in Korean Patent No. 10-2022-0114801, heat generated in the battery cell is transferred to a cooling apparatus through the heat transfer layer including graphite, and the heat is discharged to the outside.

In addition, in Korean Patent No. 10-2022-0029941, there is provided a battery module including a heat blocking film provided inside the battery module, the heat blocking film including a heat resistant layer which is formed of mica and which is formed in a sheet shape. That is, in Korean Patent No. 10-2022-0029941, by using the heat resistant layer formed of mica and formed in the sheet shape, heat or a flame is prevented from being propagated to adjacent battery cells from a battery cell in which a fire or heat is generated.

In Korean Patents described above, a propagation of a thermal runaway phenomenon between the adjacent battery cells may be delayed through the heat blocking pad or the heat resistant layer formed of mica, or heat generated in the battery cell may be transferred to the cooling apparatus through the heat transfer layer including graphite and the heat may be discharged to the outside. That is, in the conventional Korean Patents, a heat dissipation function for dissipating heat generated from a battery cell and a heat insulation function for blocking heat so that the heat is not diffused to adjacent battery cells when thermal runaway occurs are not simultaneously provided. For example, a mica sheet is used for blocking heat when thermal runaway occurs, but is not capable of realizing a heat dissipation function for a battery cell. Furthermore, although the mica sheet is capable of performing a flame propagation prevention function when thermal runaway occurs, there is a limitation in blocking of heat transferring due to a limitation in a heat insulation function.

### Disclosure

### Technical Problem

Accordingly, the present disclosure has been made keeping in mind the above problems occurring in the related art, and an objective of the present disclosure is to provide a battery module simultaneously having a heat dissipation function for dissipating heat generated in a battery cell and a heat insulation function for blocking heat so that the heat is not diffused to adjacent battery cell when thermal runaway occurs, and is to provide a battery pack provided with the battery module.

### Technical Solution

In order to achieve the objective described above, according to the present disclosure, there is provided a battery module including a cell stack and a module case accommodating the cell stack, wherein the cell stack includes a plurality of battery cells and at least one heat dissipation and heat insulation composite interposed between the battery cells, wherein the heat dissipation and heat insulation composite includes a vacuum heat insulation plate having a vacuum space therein, a graphite sheet which is insulation-coated and which is stacked on a first side surface of the vacuum heat insulation plate, and a cushioning member which is formed of a flame-retardant material and which is stacked on a second side surface of the vacuum heat insulation plate, wherein the vacuum heat insulation plate is formed by press forming two plates formed of a metal material such that a vacuum space is formed inside the vacuum heat insulation plate and the vacuum heat insulation plate is sealed, and, in a state in which a surface of one of the plates is press-machined in an embossed shape and an inner side surface of the other one of the plates is in contact with the embossed surface, the vacuum space inside the vacuum heat insulation plate is sealed, and wherein, in the vacuum heat insulation plate, a thermal conduction suppressing sheet is further disposed between the embossed surface and the inner side surface of the other one of the plates in contact with each other.

It is preferable that the graphite sheet has a structure in which a thermally conductive filler is included in expanded graphite, a thermal conductivity of the graphite sheet in a horizontal direction (a surface direction) is 150 W/mK to 350 W/mK, and a thermal conductivity of the graphite sheet in a vertical direction is 5 W/mK to 10 W/mK.

It is more preferable that the graphite sheet that is insulation-coated is formed by coating a front surface of a graphite material with a mixture having an electrical insulation property and a flame-retardant property to a thickness less than 100 *µ*m.

It is preferable that the thermal conduction suppressing sheet is a ceramic fiber sheet, a glass fiber sheet, a fumed silica sheet, or an aerogel-impregnated sheet.

The battery module may further include a heat dissipation plate disposed such that the heat dissipation plate is in contact with first side end portions of the battery cell and the heat dissipation and heat insulation composite, with a gap filler interposed between the heat dissipation plate and the first side end portions.

In addition, in order to achieve the objective described above, according to the present disclosure, there is provided a battery pack including a plurality of battery modules and a case accommodating the plurality of battery modules, wherein each of the plurality of battery modules includes a cell stack and a module case accommodating the cell stack, wherein the cell stack includes a plurality of battery cells and at least one heat dissipation and heat insulation composite interposed between the battery cells, and wherein the heat dissipation and heat insulation composite is configured as described above.

### Advantageous Effects

In the present disclosure, there is an advantage that a heat dissipation function for dissipating heat generated in the battery cell and a heat insulation function for blocking heat so that the heat is not diffused to adjacent cells when thermal runaway occurs are capable of being simultaneously performed by using the heat dissipation composite and the heat insulation composite that are interposed between the adjacent battery cells and configured to perform respective functions thereof or to simultaneously perform the two functions or by using the heat dissipation and heat insulation composite.

### Description of Drawings

FIG. 1 is a perspective view illustrating a battery module according to an embodiment of the present disclosure,
FIG. 2 is a perspective view illustrating an example of a battery cell applied to the battery module illustrated in FIG. 1,
FIG. 3 is a conceptual view illustrating a state in which a heat dissipation composite or a heat insulation composite is inserted and arranged between the battery cells,
FIG. 4 is an exemplary view illustrating a cross-sectional structure of the heat dissipation composite illustrated in FIG. 3,
FIG. 5 is an exemplary view illustrating a cross-sectional structure of the heat insulation composite illustrated in FIG. 3,
FIG. 6 is a cross-sectional view illustrating a shape and a structure of a vacuum heat insulation plate illustrated in FIG. 5,
FIG. 7 and FIG. 8 are a perspective view and a cross-sectional view of another shape and another structure of the vacuum heat insulation plate illustrated in FIG. 5, and
FIG. 9 is an exemplary view illustrating a cross-sectional structure of a heat dissipation and heat insulation composite constituting the battery module according to another embodiment of the present disclosure.

### Mode for Invention

Hereinafter, an exemplary embodiment of a battery module having a heat dissipation function and a heat insulation function and a battery pack provided with the battery module will be described in detail with reference to the accompanying drawings. The present disclosure is not limited to the embodiments disclosed below, but may be implemented in various different forms. The present embodiments are provided so that the present disclosure will be thorough and complete, and will fully convey the scope of the present disclosure to those skilled in the art.

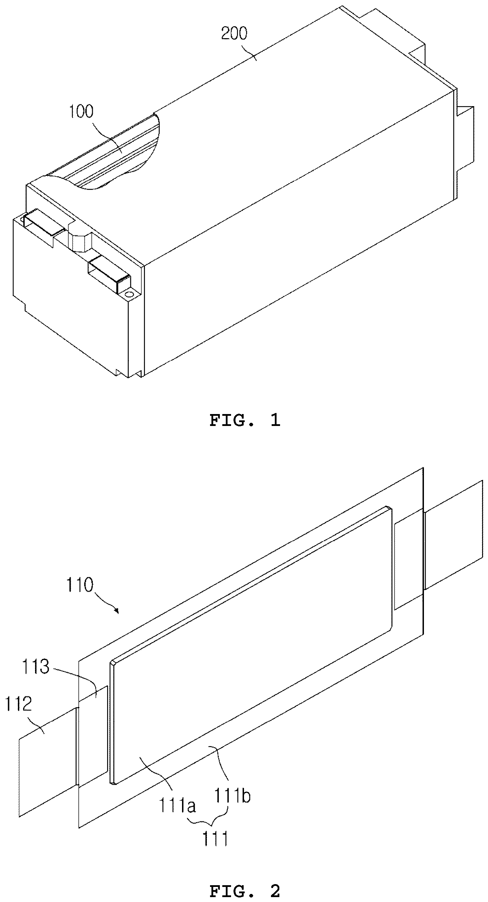

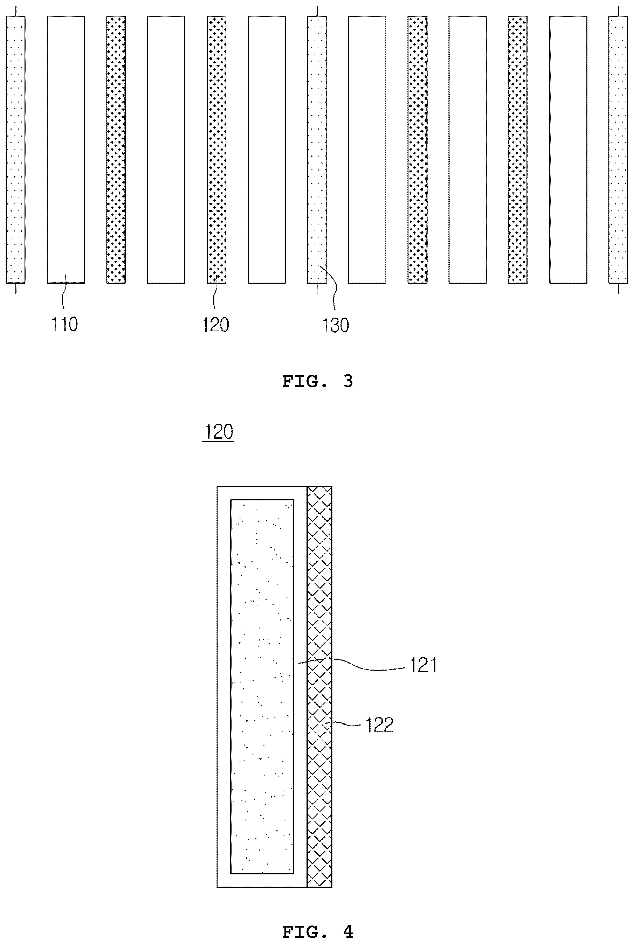

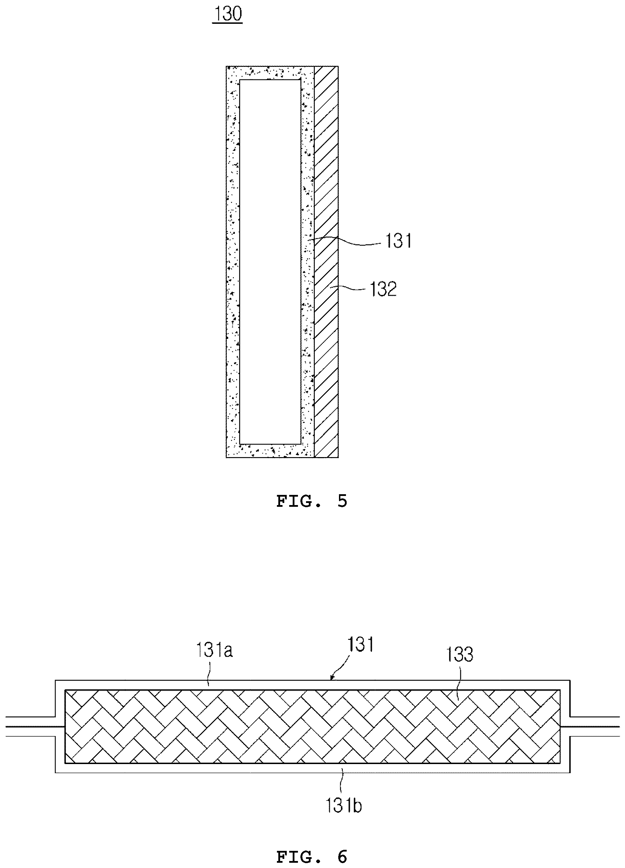

FIG. 1 is a perspective view illustrating a battery module according to an embodiment of the present disclosure, FIG. 2 is a perspective view illustrating an example of a battery cell applied to the battery module illustrated in FIG. 1, FIG. 3 is a conceptual view illustrating a state in which a heat dissipation composite or a heat insulation composite is inserted and arranged between the battery cells, FIG. 4 is an exemplary view illustrating a cross-sectional structure of the heat dissipation composite illustrated in FIG. 3, FIG. 5 is an exemplary view illustrating a cross-sectional structure of the heat insulation composite illustrated in FIG. 3, FIG. 6 is a cross-sectional view illustrating a shape and a structure of a vacuum heat insulation plate illustrated in FIG. 5, and FIG. 7 and FIG. 8 are a perspective view and a cross-sectional view of another shape and another structure of the vacuum heat insulation plate illustrated in FIG. 5.

As illustrated in FIG. 1 to FIG. 3, the battery module of the embodiment includes a cell stack 100 and a module case 200 that accommodates the cell stack 100. The cell stack 100 includes a plurality of battery cells 110 and at least one heat dissipation composite 120 and at least one heat insulation composite 130 that are respectively interposed between the battery cells 110 adjacent to each other.

For example, a pouch-type battery cell may be applied as the battery cell 110. When the battery cell 110 is the pouch-type battery cell, as illustrated in FIG. 2, the battery cell 110 may be realized in a form including an electrode assembly (not illustrated), a cell case 111, an electrode lead 112, and a sealing tape 113.

The cell case 111 includes an accommodating part 111a accommodating the electrode assembly, and includes a sealing part 111b which extends in a circumferential direction of the accommodating part 111a and which seals the cell case 111 by being thermally fused and sealed while the electrode lead 112 is pulled outward.

The electrode lead 112 is configured as a pair of electrode leads 112, the pair of electrode leads 112 is respectively connected to a positive electrode tab (not illustrated) and a negative electrode tab (not illustrated), and the pair of electrode leads 112 is pulled outside of the cell case 111. The pair of electrode leads 112 is pulled out side by side to a first side in a longitudinal direction of the battery cell 110, or may be respectively pulled out to the first side and a second side in the longitudinal direction of the battery cell 110. The battery cell 110 applied to the embodiment may be a one-directional pulling-type battery cell in which a positive electrode lead and a negative electrode lead are pulled in the same direction to each other, or may be a bi-directional pulling-type battery cell in which a positive electrode lead and a negative electrode lead are pulled in directions opposite to each other.

The sealing tape 113 is attached to a circumference of the electrode lead 112, and is interposed between an inner side surface of the sealing part 111b of the cell case 111 and the electrode lead 112. The sealing tape 113 prevents the sealing property of the sealing part 111b from being weakened due to pulling of the electrode lead 112.

As the battery cell applied to the embodiment, the pouch-type battery cell described above and a prismatic-type battery cell may be used, and also a battery cell having a structure capable of being in surface contact with the heat dissipation composite 120 and the heat insulation composite 130 that will be described later may be used.

As illustrated in FIG. 4, it is preferable that the heat dissipation composite 120 is configured such that the heat dissipation composite 120 is interposed between the battery cells 110 adjacent to each other and performs a function for dissipating heat generated in the battery cells 110 and a function for preventing a flame propagation when a fire occurs. Therefore, the heat dissipation composite 120 of the embodiment is required to have excellent heat transfer performance, light weight, and a non-combustible property. In addition, it is preferable that the heat dissipation composite 120 of the embodiment includes a cushioning member capable of cushioning a deformation of a component when swelling of the battery cell occurs. To this end, the heat dissipation composite 120 of the embodiment may be formed by stacking a graphite sheet 121 insulation-coated with a heat transfer member for heat dissipation to a thickness of 0.3 mm to 1.0 mm and a cushioning member 122 formed of a flame-retardant material such as polyurethane foam. At this time, it is preferable that the cushioning member 122 is stacked only on a first side surface of the insulation-coated graphite sheet 121 so that the basic heat dissipation function is capable of being realized.

The graphite sheet may have a structure in which a thermally conductive filler is included in expanded graphite, and it is preferable that the thermal conductivity of the graphite sheet in a horizontal direction (a surface direction) is 150 W/mK to 350 W/mK, and the thermal conductivity of the graphite sheet in a vertical direction is 5 W/mK to 10 W/mK. Meanwhile, when the thermal conductivity of the graphite sheet in the horizontal direction (the surface direction) is less than 150 W/mK, there is a problem (disadvantage) that the mechanical strength of the graphite sheet is reduced due to a low density. When the thermal conductivity of the graphite sheet in the horizontal direction is more than 350 W/mK, there is a problem (disadvantage) that the weight increases and the production cost increases due to a high density. When the thermal conductivity of the graphite sheet in the vertical direction is less than 5 W/mK, there is a problem (disadvantage) that the cell heat dissipation performance is reduced. When the thermal conductivity of the graphite sheet in the vertical direction is more than 15 W/mK, there is a problem (disadvantage) that a separate additive is required and the production cost increases. Therefore, it is preferable that the graphite sheet of the embodiment has the thermal conductivity in the horizontal direction (the surface direction) and the thermal conductivity in the vertical direction in the condition that are described above.

Meanwhile, the graphite sheet with only a graphite material does not have the electrical insulation property. Therefore, it is preferable that the graphite sheet 121 of the embodiment is formed by coating a front surface of the graphite material with a mixture having the electrical insulation property and the flame-retardant property to a thickness less than 100 µm. Meanwhile, when the mixture is coated with a thickness exceeding 100 µm, there is a problem (disadvantage) that the effective thermal conductivity of an entire heat dissipation sheet layer including a coating layer is reduced. Therefore, it is preferable that the mixture is coated to a thickness less than 100 µm. As the mixture, a ceramic-based material or a urethane base material may be used, and an acrylic-based adhesive component may be mixed so that the battery cell and the cushioning member are capable of being attached thereto.

As illustrated in FIG. 5 to FIG. 8, it is preferable that the heat insulation composite 130 is configured such that the heat insulation composite 130 is interposed between the battery cells 110 adjacent to each other and performs an insulation function for blocking heat so that the heat is not diffused to adjacent battery cells 110 when thermal runaway occurs in the battery cell 110 and a function for preventing a flame propagation. Therefore, in order to prevent heat from being diffused to adjacent battery cells when thermal runaway occurs, the heat insulation composite 130 of the embodiment may be formed by stacking a vacuum heat insulation plate 131 formed of a stainless steel material having excellent thermal blocking performance, light weight, and a non-combustible property, and a cushioning member 132 formed of a flame-retardant material such as polyurethane foam. At this time, it is preferable that the cushioning member 132 is stacked only on a first side surface of the vacuum heat insulation plate 131 so that the basic heat insulation function is capable of being realized.

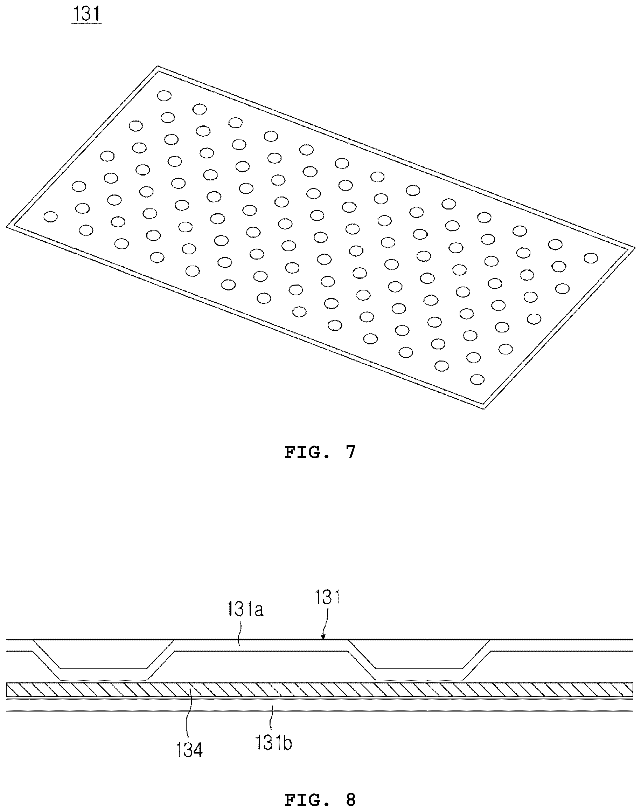

The vacuum heat insulation plate 131 is formed by press forming two plates 131a and 131b such that a vacuum space is formed therein and the vacuum heat insulation plate 131 is sealed, and may be formed by using a metal material such as stainless steel having a thickness of 0.1 mm to 0.3 mm such that the vacuum space is formed therein and the vacuum heat insulation plate 131 is sealed so that very excellent thermal insulation performance (thermal conductivity of 0.005 W/mK) having the thermal conductivity about 1/60 of the thermal conductivity of a mica sheet is realized. In addition, since the vacuum heat insulation plate 131 is required to prevent an inner portion of the vacuum heat insulation plate 131 from being collapsed due to vacuum during a vacuum condition, and is required to resist a compressive force due to external atmospheric pressure. Therefore, a porous material 133 having a low thermal conductivity may be filled between the two plates 131a and 131b and the vacuum heat insulation plate 131 may be sealed (see FIG. 6), or a surface of at least any one plate 131a may be press-machined in an embossed shape and the embossed surface may be in contact with an inner side surface of the other plate 131b and the vacuum heat insulation plate 131 may be sealed (see FIG. 7 and FIG. 8). Meanwhile, the two plates 131a and 131b are integrated by welding each other along borders thereof, and argon welding, laser welding, plasma welding, and so on may be used as a welding method.

In addition, in order to suppress a thermal conduction phenomenon caused by two plates 131a and 131b being in contact with each other by the embossed surface, the vacuum heat insulation plate 131 may further include a thermal conduction suppressing sheet 134 disposed between the embossed surface and the inner surface of the other plate that are in contact with each other. At this time, as the thermal conduction suppressing sheet, a ceramic fiber sheet, a glass fiber sheet, a fumed silica sheet, an aerogel-impregnated sheet, and so on may be used. Among them, considering the fire resistance of 1,000 degrees Celsius or more, it is preferable to use the ceramic fiber sheet.

According to another embodiment of the present disclosure, the battery module may include at least one heat dissipation and heat insulation composite 140 having the two functions simultaneously instead of the heat dissipation composite 120 and the heat insulation composite 130 that are respectively having the two functions. Here, the heat dissipation and heat insulation composite 140 is interposed between the battery cells adjacent to each other.

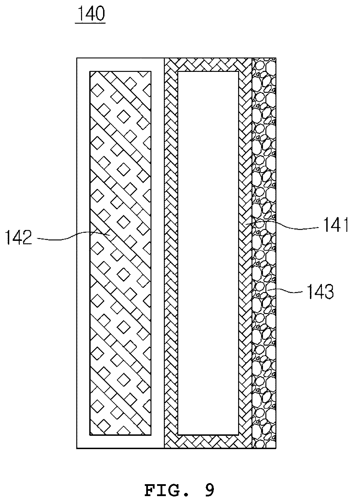

FIG. 9 is an exemplary view illustrating a cross-sectional structure of the heat dissipation and heat insulation composite constituting the battery module according to another embodiment of the present disclosure. As illustrated in FIG. 9, the heat dissipation and heat insulation composite 140 of this embodiment includes a vacuum heat insulation plate 141 having a vacuum space therein, a graphite sheet 142 which is insulation-coated and which is stacked on a first side surface of the vacuum heat insulation plate 141, and a cushioning member 143 which is formed of a flame-retardant material and which is stacked on a second side surface of the vacuum heat insulation plate 141. Since the vacuum heat insulation plate 141, the insulation-coated graphite sheet 142, and the cushioning member 143 of this embodiment are configured in the same manner as the corresponding components described above, so that the description thereof will be omitted.

Meanwhile, in configuring the heat dissipation and heat insulation composite 140 of this embodiment, the vacuum heat insulation plate 141 and the cushioning member 143 may be respectively stacked on both sides of the insulation-coated graphite sheet 142. However, the insulation-coated graphite sheet 142 and the cushioning member 143 are respectively stacked on both sides of the vacuum heat insulation plate 141, which is because there is an advantage that a surface in contact with the battery cell is capable of performing the heat dissipation function and a vacuum heat insulation layer in a middle portion of the heat dissipation and heat insulation composite 140 is capable of performing the heat insulation function when thermal runaway occurs.

Meanwhile, the battery module of this embodiment may further include a heat dissipation plate. Here, the heat dissipation plate is formed of a metal material such as aluminum or copper, and may have a structure in which a cooling water flows inside the heat dissipation plate, but is not limited thereto. The heat dissipation plate has a shape in contact with first side end portions of the battery cell 110, the heat dissipation composite 120, and the heat insulation composite 130 in FIG. 3 and in contact with a first side end portion of the heat dissipation and heat insulation composite 140 in FIG. 9, with a gap filler interposed therebetween. Therefore, heat generated in the battery cell 110 is more effectively transferred to the heat dissipation plate through the gap filler, so that efficient heat dissipation is capable of being realized.

The battery pack of this embodiment may include a plurality of battery modules and a case accommodating the plurality of battery modules having a configuration relationship as described above. Since the case of this embodiment may be configured as a case with a general configuration relationship applied to the battery pack, so that a detailed description thereof will be omitted.

The features of the battery module having the heat dissipation function and the heat insulation function and the battery pack provided with the battery module of the present disclosure have been described above with reference to the accompanying drawings, but they are just preferable examples. Therefore, it is apparent to those skilled in the art that the present disclosure is not limited to the embodiments and may be modified in various ways without departing from the spirit and scope of the present disclosure, so it should be understood that those modifications and changes are included in claims of the present disclosure.

### Industrial Applicability

The present disclosure may be applied to a battery module and/or a battery pack, such as a battery module and/or a battery pack used in an electric vehicle, an Energy Storage System (ESS), and so on, and is capable of simultaneously realizing a heat dissipation function for dissipating heat generated in a battery cell and a heat insulation function for blocking heat so that heat is not diffused to adjacent battery cells when thermal runaway occurs.

## Claims

1. A battery module having a heat dissipation function and a heat insulation function, the battery module comprising a cell stack and a module case accommodating the cell stack,
wherein the cell stack comprises a plurality of battery cells and at least one heat dissipation and heat insulation composite interposed between the battery cells,
wherein the heat dissipation and heat insulation composite comprises a vacuum heat insulation plate having a vacuum space therein, a graphite sheet which is insulation-coated and which is stacked on a first side surface of the vacuum heat insulation plate, and a cushioning member which is formed of a flame-retardant material and which is stacked on a second side surface of the vacuum heat insulation plate,
wherein the vacuum heat insulation plate is formed by press forming two plates formed of a metal material such that a vacuum space is formed inside the vacuum heat insulation plate and the vacuum heat insulation plate is sealed, and, in a state in which a surface of one of the plates is press-machined in an embossed shape and an inner side surface of the other one of the plates is in contact with the embossed surface, the vacuum space inside the vacuum heat insulation plate is sealed, and
wherein, in the vacuum heat insulation plate, a thermal conduction suppressing sheet is further disposed between the embossed surface and the inner side surface of the other one of the plates in contact with each other.

2. The battery module of claim 1, wherein the graphite sheet has a structure in which a thermally conductive filler is included in expanded graphite, a thermal conductivity of the graphite sheet in a horizontal direction (a surface direction) is 150 W/mK to 350 W/mK, and a thermal conductivity of the graphite sheet in a vertical direction is 5 W/mK to 10 W/mK.

3. The battery module of claim 2, wherein the graphite sheet that is insulation-coated is formed by coating a front surface of a graphite material with a mixture having an electrical insulation property and a flame-retardant property to a thickness less than 100 µm.

4. The battery module of claim 1, wherein the thermal conduction suppressing sheet is a ceramic fiber sheet, a glass fiber sheet, a fumed silica sheet, or an aerogel-impregnated sheet.

5. The battery module of claim 1, further comprising a heat dissipation plate disposed such that the heat dissipation plate is in contact with first side end portions of the battery cell and the heat dissipation and heat insulation composite, with a gap filler interposed between the heat dissipation plate and the first side end portions.

6. A battery pack comprising a plurality of battery modules and a case accommodating the plurality of battery modules,
wherein each of the plurality of battery modules comprises a cell stack and a module case accommodating the cell stack,
wherein the cell stack comprises a plurality of battery cells and at least one heat dissipation and heat insulation composite interposed between the battery cells,
wherein the heat dissipation and heat insulation composite comprises a vacuum heat insulation plate having a vacuum space therein, a graphite sheet which is insulation-coated and which is stacked on a first side surface of the vacuum heat insulation plate, and a cushioning member which is formed of a flame-retardant material and which is stacked on a second side surface of the vacuum heat insulation plate,
wherein the vacuum heat insulation plate is formed by press forming two plates formed of a metal material such that a vacuum space is formed inside the vacuum heat insulation plate and the vacuum heat insulation plate is sealed, and, in a state in which a surface of one of the plates is press-machined in an embossed shape and an inner side surface of the other one of the plates is in contact with the embossed surface, the vacuum space inside the vacuum heat insulation plate is sealed, and
wherein, in the vacuum heat insulation plate, a thermal conduction suppressing sheet is further disposed between the embossed surface and the inner side surface of the other one of the plates in contact with each other.

7. The battery pack of claim 6, wherein the graphite sheet has a structure in which a thermally conductive filler is included in expanded graphite, a thermal conductivity of the graphite sheet in a horizontal direction (a surface direction) is 150 W/mK to 350 W/mK, and a thermal conductivity of the graphite sheet in a vertical direction is 5 W/mK to 10 W/mK.

8. The battery pack of claim 7, wherein the graphite sheet that is insulation-coated is formed by coating a front surface of a graphite material with a mixture having an electrical insulation property and a flame-retardant property to a thickness less than 100 µm.

9. The battery pack of claim 6, wherein the thermal conduction suppressing sheet is a ceramic fiber sheet, a glass fiber sheet, a fumed silica sheet, or an aerogel-impregnated sheet.

10. The battery pack of claim 6, further comprising a heat dissipation plate disposed such that the heat dissipation plate is in contact with first side end portions of the battery cell and the heat dissipation and heat insulation composite, with a gap filler interposed between the heat dissipation plate and the first side end portions.
